# EUROPEAN PATENT APPLICATION

(11) **EP 1 903 772 A1**
(43) Date of publication of application: **26.03.2008**
(21) Application number: 07253677.4
(22) Date of filing: 17.09.2007
(51) Int. Cl.: H04N 1/32

(54) **Logically partitioned multifunctional apparatus**

(30) Priority: 19.09.2006 JP 2006252912
(71) Applicant: Ricoh Company, Ltd., Tokyo 143-8555 (JP)
(72) Inventor: Shida, Haruo, Ohta-ku, Tokyo 143-8555 (JP); Shiota, Noriyuki, Ohta-ku, Tokyo 143-8555 (JP); Alain, Volmat, Ohta-ku, Tokyo 143-8555 (JP)
(74) Representative: Mounteney, Simon James

(57) **Abstract**

A multifunctional apparatus includes a hardware resource, a plurality of functional systems, and a hypervisor. The hypervisor partitions the hardware resource into a plurality of logical partitions and allocates the plurality of logical partitions respectively to the plurality of functional systems.

## Description

The present invention relates generally to a logically partitioned multifunctional apparatus capable of performing a plurality of functions.

Recently, a multifunctional apparatus capable of performing a plurality of functions is widely used. For example, in an office environment, a multifunctional apparatus may be provided, which is capable of copying, faxing, printing, and scanning. In one example, the multifunctional apparatus having the functions of copying, faxing, printing, and scanning may be provided with copy application software, fax application software, print application software, and scan application software, each of which may use a hardware resource of the apparatus under control of an operating system (OS). However, in order to add one function, or one application software, to the multifunctional apparatus having such structure, the influence on the existing application software may need to be considered such that development efficiency may be lowered.

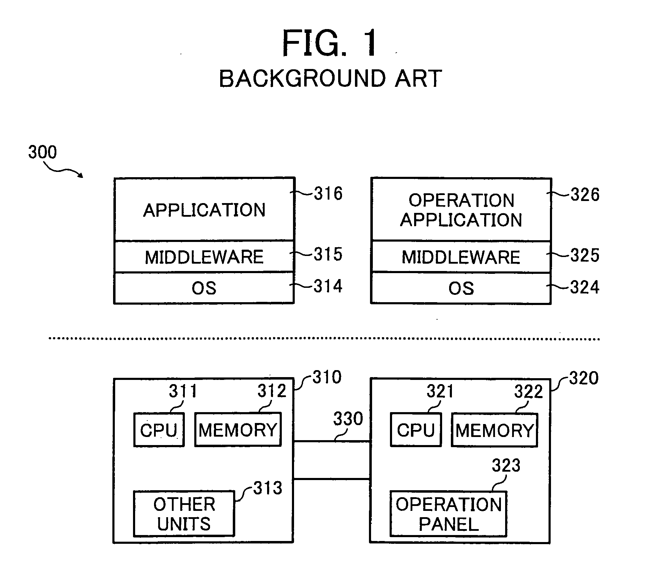

In another example, the multifunctional apparatus may be implemented such that each function may be performed by a functional system having an application software, OS, and hardware resource. For example, in a multifunctional apparatus 300 shown in FIG. 1, the function related to an operation panel 323 may be managed independently from the other functions of the apparatus 300 by an operation system including an operation board 320, OS 324, middleware 325, and operation application 326.

Referring to FIG. 1, a hardware platform of the multifunctional apparatus 300 includes a controller board 310 and the operation board 320. The controller board 310 and the operation board 320 are connected via an interface 330 to exchange data. The interface 330 may be implemented by, for example, a local area network (LAN), universal serial bus (USB), or peripheral component interconnect (PCI). The controller board 310, which includes a central processing unit (CPU) 311, memory 312, and other units 313, may control various functions provided by the multifunctional apparatus 300. The operation board 320, which is provided independently from the controller board 310, may control the function related to the operation panel 323 including the function of inputting an instruction from a user or outputting a message to the user. The operation board 320 includes a CPU 321, memory 322, and operation panel 323.

Still referring to FIG. 1, a software platform of the multifunctional apparatus 300 includes an OS 314, middleware 315, and various applications 316, each of which operates above the controller board 310 to perform one or more functions of the apparatus 300. The software platform of the multifunctional apparatus 300 additionally includes the OS 324, middleware 325, and operation application 326, each of which operates above the operation board 320 to perform the function related to the operation panel 323.

With this structure, the operation system, such as the operation application 326, may be developed independently without influencing the other systems of the apparatus 300. However, this structure, which requires the additional CPU or memory, may increase the overall cost of the apparatus. Further, in order to upgrade the capability of the CPU 321 or the memory 322 of the operation board 320, the operation board 320 or the operation application 326 may need to be re-designed.

An object of the present invention is to provide a logically partitioned multifunctional apparatus capable of performing a plurality of functions.

In one example, the multifunctional apparatus includes a hardware resource, a plurality of functional systems, and a hypervisor. The hypervisor partitions the hardware resource into a plurality of logical partitions and allocates the plurality of logical partitions respectively to the plurality of functional systems. For example, the plurality of functional systems may include a controller system, which controls the plurality of functions provided by the multifunctional apparatus including scanning, copying, faxing, and/or printing; and a functional system, which controls one or more selected functions independently from the plurality of functions.

In one example, the functional system may correspond to an operation system, which controls a function related to an operation panel provided in the hardware resource.

In another example, the functional system may correspond to a network system, which controls a function related to a network interface provided in the hardware resource.

In another example, the functional system may correspond to a fax system, which controls a function related to a fax controller unit provided in the hardware resource.

In addition to the above-described example embodiments, the present invention may be practiced in various other ways.

A more complete appreciation of the disclosure and many of the attendant advantages and features thereof can be readily obtained and understood from the following detailed description with reference to the accompanying drawings, wherein:

FIG. 1 is a schematic block diagram illustrating the structure of a background multifunctional apparatus;

FIG. 2 is a schematic block diagram illustrating the structure of a multifunctional apparatus according to an example embodiment of the present invention;

FIG. 3 is a schematic block diagram illustrating the structure of a multifunctional apparatus according to an example embodiment of the present invention;

FIG. 4 is a schematic block diagram illustrating the structure of a multifunctional apparatus according to an example embodiment of the present invention; and

FIG. 5 is a schematic block diagram illustrating the structure of a multifunctional apparatus according to an example embodiment of the present invention.

The accompanying drawings are intended to depict example embodiments of the present invention and should not be interpreted to limit the scope thereof. The accompanying drawings are not to be considered as drawn to scale unless explicitly noted.

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing example embodiments shown in the drawings, specific terminology is employed for the sake of clarity. However, the present disclosure is not intended to be limited to the specific terminology so selected and it is to be understood that each specific element includes all technical equivalents that operate in a similar manner.

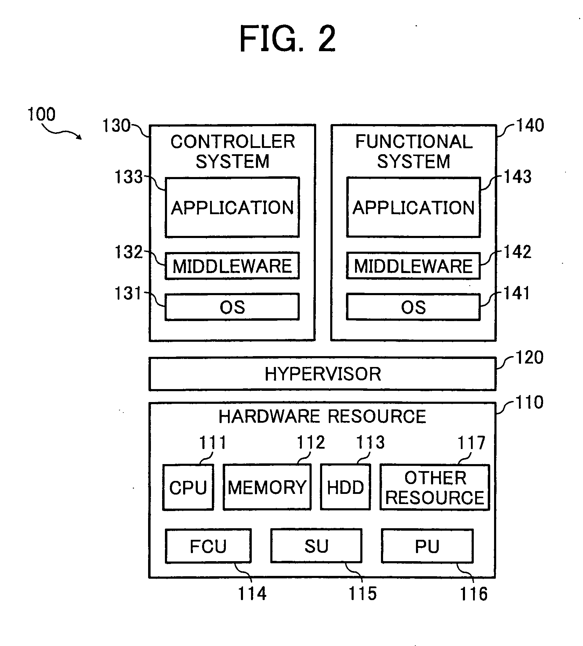

Referring now to the drawings, wherein like reference numerals designate identical or corresponding parts throughout the several views, FIG. 2 illustrates the structure of a multifunctional apparatus 100 according to an example embodiment of the present invention. The multifunctional apparatus 100 includes a hardware resource 110, a hypervisor 120, and a plurality of functional systems including a controller system 130 and a functional system 140.

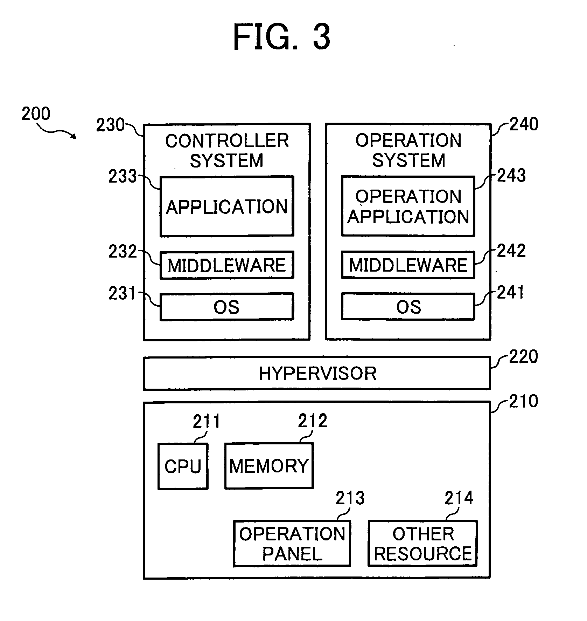

The hardware resource 110 may function as a hardware platform of the multifunctional apparatus 100. In this example, the hardware resource 110 includes a CPU 111, a memory 112, a hard disk drive (HDD) 113, a fax controller unit (FCU) 114, a scanner unit (SU) 115, a printer unit (PU) 116, and other hardware resource 117. Alternatively, as described below referring to any one of FIGS. 3, 4, and 5, the hardware resource 110 may include any desired kind of unit, such as a network controller, image data processor, data reader or writer, or memory manager, depending on the type of the multifunctional apparatus 100.

The CPU 111 may be implemented by any kind of processor capable of controlling various functions provided by the multifunctional apparatus 100. The memory 112 may function as a primary memory, which stores various programs or data to be used by the CPU 111. The memory 112 may be implemented by, for example, a random access memory (RAM). The HDD 113 may function as a secondary memory, which stores various programs or data to be used by the CPU 111. The FCU 114 allows the apparatus 100 to send or receive fax data to or from another apparatus via a communication line. The SU 115 allows the apparatus 100 to scan an original into data. The function of scanning, provided by the SU 115, may be used by the FCU 114 or the PU 116 as needed. The PU 116 may print out data, which may be obtained within the apparatus 100 or from another apparatus via a network or the communication line, as a printed sheet. The function of printing, provided by the PU 116, may be used by the FCU 114 as needed. The other hardware resource 117 may correspond to any hardware resource, which may be additionally provided depending on the type of the apparatus 100. Using one or more units of the hardware resource 110, the multifunctional apparatus 100 is capable of performing the functions of scanning, faxing, copying, and printing. Alternatively, as described below referring to any one of FIGS. 3, 4, and 5, the multifunctional apparatus 100 may provide any desired kind of functions, such as the function of processing image data or the function of managing memory, depending on the type of the multifunctional apparatus 100 or the type of the other hardware resource 117.

The hypervisor 120, which is provided above the hardware resource 110, partitions the hardware resource 110 into a plurality of logical partitions. The hypervisor 120 causes each one of the controller system 130 and the functional system 140 to recognize each one of the plurality of logical partitions as a virtual machine. In this manner, the hypervisor 120 allows the systems 130 and 140 to simultaneously operate above one hardware resource 110.

The controller system 130 may control various functions to be performed by the multifunctional apparatus 100. The controller system 130 operates independently in the virtual machine, or the logical partition, which is allocated by the hypervisor 120. The controller system 130 includes an OS 131, middleware 132, and various applications 133. The middleware 132, which allows the various applications 133 to operate, operates under the OS 131. The various applications 133, which provide the functions of the controller system 130, operate under the OS 131.

The functional system 140 may operate independently in the virtual machine, or the logical partition, which is allocated by the hypervisor 120. The functional system 140 includes an OS 141, middleware 142, and application 143. The middleware 142, which allows the application 143 to operate, operates under the OS 141. The application 143, which provides the function of the functional system 140, operates under the OS 141. In this example, the function of the functional system 140 may correspond to any function that the user desires to manage independently from the other functions of the apparatus 100, which may be managed by the other functional systems, such as by the controller system 130.

Since the functional system 140 is independent from the controller system 130, the functional system 140 may be developed independently from the controller system 130 without influencing the controller system 130, thus improving the development efficiency.

Referring now to FIG. 3, the structure of a multifunctional apparatus 200 is explained according to an example embodiment of the present invention. The multifunctional apparatus 200 includes a hardware resource 210, a hypervisor 220, and a plurality of functional systems including a controller system 230 and an operation system 240. In this example, the function related to a user interface may be managed independently by the operation system 240.

The hardware resource 210 includes a CPU 211, a memory 211, an operation panel 213, and other hardware resource 214. The CPU 211, the memory 211, and the other hardware resource 214 may respectively correspond to the CPU 111, the memory 112, and the other hardware resource 110. The operation panel 213 may perform the function of inputting an instruction from a user or outputting a message to the user. For example, the operation panel 213 may be implemented by an input device capable of inputting the user instruction and/or an output device capable of outputting data to the user. For example, the input device may include various keys or buttons that allow the user to input the instruction, a microphone, etc. The output device may include a display, such as a liquid crystal display (LCD), a buzzer, a speaker, etc. Alternatively, the input device and the output device may be implemented by a touch panel screen capable of inputting or displaying.

The hypervisor 220 partitions the hardware resource 210 into a plurality of logical partitions, or a plurality of virtual machines, and allocates each logical partition to each one of the controller system 230 and the operation system 240.

The controller system 230 may control various functions to be performed by the multifunctional apparatus 200. The controller system 230 operates independently in the virtual machine, or the logical partition, which is allocated by the hypervisor 220. The controller system 230 includes an OS 231, middleware 232, and various applications 233, each of which operates in the virtual machine to provide the functions of the multifunctional apparatus 200.

The operation system 240 may control the function related to the operation panel 213, including the function of inputting the user instruction or outputting the message to the user. The operation system 240 operates independently in the virtual machine, or the logical partition, which is allocated by the hypervisor 220. The operation system 240 includes an OS 241, middleware 242, and operation application 243. The middleware 242, which allows the operation application 243 to operate, operates under the OS 241. The operation application 243, which provides the function related to the operation panel 213, operates under the OS 241.

Since the operation system 240 is independent from the controller system 230, the operation system 240 may be developed independently from the controller system 230 without influencing the controller system 230. Further, when compared with the multifunctional apparatus 300 of FIG. 1, since the hardware resource 210 may be shared by more than one system, the overall cost of the apparatus may decrease. Still comparing with the multifunctional apparatus 300 of FIG. 1, the hardware resource 210 may be easily allocated to the operation system 240, thus redesigning of the board is not necessary.

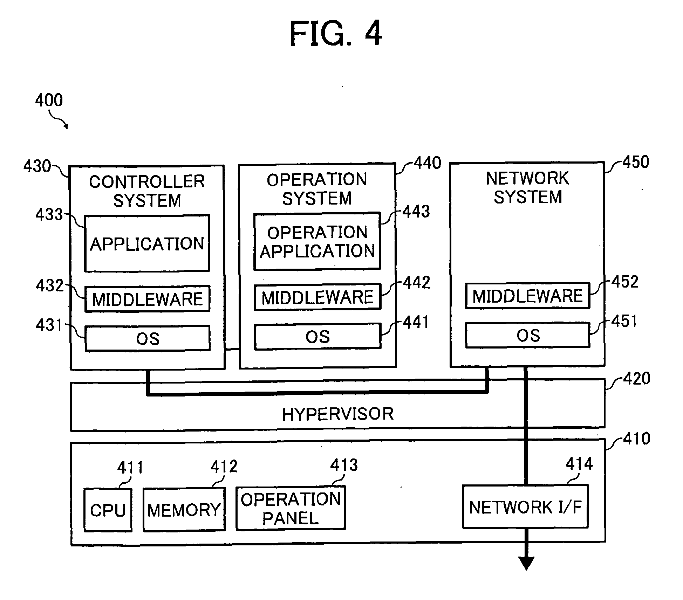

Referring now to FIG. 4, the structure of a multifunctional apparatus 400 is explained according to an example embodiment of the present invention. The multifunctional apparatus 400 includes a hardware resource 410, a hypervisor 420, and a plurality of functional systems including a controller system 430, an operation system 440, and a network system 450. In this example, the function related to the user interface and the function related to a network interface may be managed independently, respectively by the operation system 440 and the network system 450.

The hardware resource 410 includes a CPU 411, a memory 412, an operation panel 413, and a network interface 414. The CPU 411, the memory 412, and the operation panel 413 may respectively correspond to the CPU 111, the memory 112, and the operation panel 213. The network interface 414 may perform the function of controlling network connection between the multifunctional apparatus 400 and another apparatus.

The hypervisor 420 partitions the hardware resource 410 into a plurality of partitions, or a plurality of virtual machines, and allocates each logical partition to each one of the controller system 430, the operation system 440, and the network system 450.

The controller system 430 may control various functions to be performed by the multifunctional apparatus 400. The controller system 430 operates independently in the virtual machine, or the logical partition, which is allocated by the hypervisor 420. The controller system 430 includes an OS 431, middleware 432, and various applications 433, each of which operates in the virtual machine to provide the functions of the multifunctional apparatus 400.

The operation system 440 may control the function related to the operation panel 413, including the function of inputting the user instruction or outputting the message to the user. The operation system 440 operates independently in the virtual machine, or the logical partition, which is allocated by the hypervisor 420. The operation system 440 includes an OS 441, middleware 442, and operation application 443. The middleware 442, which allows the operation application 443 to operate, operates under the OS 441. The operation application 443, which provides the function related to the operation panel 413, operates under the OS 441.

The network system 450 may control the function related to the network I/F 414, including the function of controlling network connection. The network system 450 operates independently from the other systems in the virtual machine, or the logical partition, which is allocated by the hypervisor 420. The network system 450 includes an OS 451 and middleware 452. The middleware 452, which provides the function related to the network I/F 414, operates under the OS 451.

With this structure, the controller system 430 may be connected to the outside through the network system 450. In this manner, the network system 450 may function as a firewall to the controller system 430, thus improving the security.

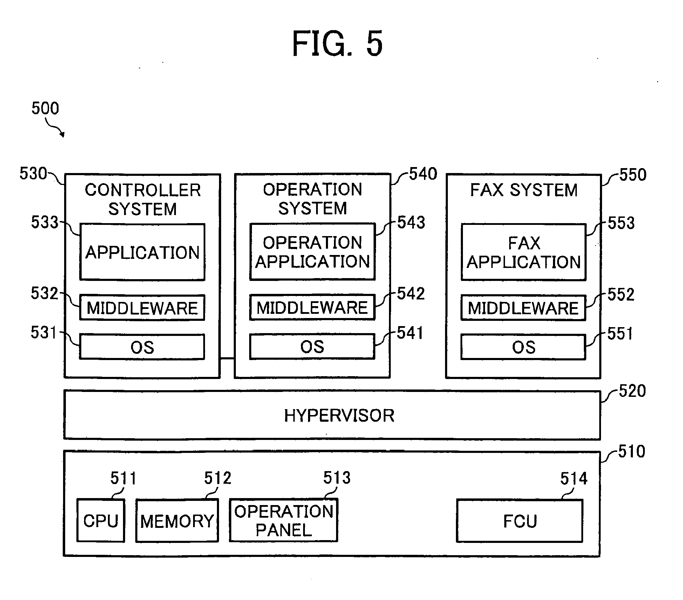

Referring now to FIG. 5, the structure of a multifunctional apparatus 500 is explained according to an example embodiment of the present invention. The multifunctional apparatus 500 includes a hardware resource 510, a hypervisor 520, and a plurality of functional systems including a controller system 530, an operation system 540, and a fax system 550. In this example, the function related to the user interface and the function of faxing may be managed independently, respectively by the operation system 540 and the fax system 550.

The hardware resource 510 includes a CPU 511, a memory 512, an operation panel 513, and a FCU 514. The CPU 511, the memory 512, the operation panel 513, and the FCU 514 may respectively correspond to the CPU 111, the memory 112, the operation panel 213, and the FCU 114.

The hypervisor 520 partitions the hardware resource 510 into a plurality of partitions, or a plurality of virtual machines, and allocates each logical partition to each one of the controller system 530, the operation system 540, and the fax system 550.

The controller system 530 may control various functions to be performed by the multifunctional apparatus 500. The controller system 530 operates independently in the virtual machine, or the logical partition, which is allocated by the hypervisor 520. The controller system 530 includes an OS 531, middleware 532, and various applications 533, each of which operates in the virtual machine to provide the functions of the multifunctional apparatus 500.

The operation system 540 may control the function related to the operation panel 513, including the function of inputting the user instruction or outputting the message to the user. The operation system 540 operates independently in the virtual machine, or the logical partition, which is allocated by the hypervisor 520. The operation system 540 includes an OS 541, middleware 542, and operation application 543. The middleware 542, which allows the operation application 543 to operate, operates under the OS 541. The operation application 543, which provides the function related to the operation panel 513, operates under the OS 541.

The fax system 550 may control the faxing function, including the function of sending or receiving fax data. The fax system 550 operates independently from the other systems in the virtual machine, or the logical partition, which is allocated by the hypervisor 520. The fax system 550 includes an OS 551, middleware 552, and fax application 553. The middleware 552, which allows the fax application 553 to operate, operates under the OS 551. The fax application 553, which provides the faxing function, operates under the OS 551.

Since the faxing function is unique compared to the other functions of the apparatus 500, providing the fax system 500 independently from the other systems may improve the development efficiency, while minimizing the influence on the other systems.

Numerous additional modifications and variations are possible in light of the above teachings. It is therefore to be understood that within the scope of the appended claims, the disclosure of the present invention may be practiced otherwise than as specifically described herein.

For example, elements and/or features of different illustrative embodiments may be combined with each other and/or substituted for each other within the scope of this disclosure and appended claims.

Further, as described above, any one of the above-described and other methods of the present invention may be embodied in the form of a computer program stored in any kind of storage medium. Examples of storage mediums include, but are not limited to, flexible disk, hard disk, optical discs, magneto-optical discs, magnetic tapes, involatile memory cards, ROM (read-only-memory), etc.

Alternatively, any one of the above-described and other methods of the present invention may be implemented by ASIC, prepared by interconnecting an appropriate network of conventional component circuits or by a combination thereof with one or more conventional general purpose microprocessors and/or signal processors programmed accordingly.

This patent application is based on and claims priority to Japanese Patent Application No. 2006-252912, filed on September 19, 2006, in the Japanese Patent Office.

## Claims

1. A multifunctional apparatus, comprising:
a hardware resource;
a plurality of functional systems; and
a hypervisor configured to partition the hardware resource into a plurality of logical partitions and allocate the plurality of logical partitions respectively to the plurality of functional systems.

2. Apparatus according to claim 1, wherein the plurality of functional systems comprises:
a controller system configured to control a plurality of functions provided by the apparatus, the plurality of functions including at least one of scanning, copying, faxing, and printing; and
a functional system configured to control one or more selected functions independently from the plurality of functions.

3. Apparatus according to claim 2, wherein the hardware resource comprises an operation panel, and wherein the functional system comprises:
an operation system configured to control a function related to the operation panel.

4. Apparatus according to claim 3, wherein the hardware resource further comprises a network interface, and wherein the functional system further comprises:
a network system configured to control a function related to the network interface.

5. Apparatus according to claim 4, wherein the network system is configured to function as a firewall to the controller system.

6. Apparatus according to any one of claims 3, 4, or 5, wherein the hardware resource further comprises a fax controller unit, and wherein the functional system further comprises:
a fax system configured to control a function related to the fax controller unit.
